(19)

**Europäisches Patentamt**
**European Patent Office**
**Office européen des brevets**

(11) **EP 4 765 547 A1**

(12) **EUROPEAN PATENT APPLICATION**

(43) Date of publication:
**24.06.2026  Bulletin 2026/26**

(21) Application number: **24221964.0**

(22) Date of filing: **19.12.2024**

(51) International Patent Classification (IPC):
**H02J 3/36** (2026.01)    **H02M 1/00** (2006.01)
**H02M 7/757** (2006.01)    **G05B 11/01** (2006.01)

(52) Cooperative Patent Classification (CPC):
**H02J 3/36; H02M 1/0003; H02M 7/7575**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GE Vernova Technology GmbH**
**5400 Baden (CH)**

(72) Inventors:
• **QORIA, Taoufik**
  **12277 Berlin (DE)**
• **BARKER, Carl**
  **Stafford ST16 1WS (GB)**
• **JASIM, Omar**
  **Stafford ST16 1WS (GB)**

(74) Representative: **Openshaw & Co.**
**8 Castle Street**
**Farnham, Surrey GU9 7HR (GB)**

(54) **IMPROVEMENTS RELATING TO DC VOLTAGE CONTROL IN POWER TRANSMISSION NETWORKS**

(57)  There is provided a method performed by a DC voltage controller for a HVDC converter, the method comprising: generating a synchronous phase angle from a DC voltage error, wherein the DC voltage error is generated from a measured DC voltage and a demanded DC voltage; generating an AC grid phase angle from an AC grid signal; generating a DC power compensation function based at least in part on the measured DC voltage; and generating, for the HVDC converter, a phase angle demand based on at least one of: the synchronous phase angle, the AC grid phase angle, and the DC power compensation function.

900

| Generating a synchronous phase angle from a DC voltage error, wherein the DC voltage error is generated from a measured DC voltage and a demanded DC voltage | 902 |

↓

| Generating an AC grid phase angle from an AC grid signal | 904 |

↓

| Generating a DC power compensation function based at least in part on the measured DC voltage | 906 |

↓

| Generating, for the HVDC converter, a phase angle demand based on at least one of: the synchronous phase angle, the AC grid phase angle, and the DC power compensation function | 908 |

Figure 9

EP 4 765 547 A1

## Description

Field

The subject matter herein relates generally to the field of power transmission networks and more specifically to direct current (DC) Voltage Control in power transmission networks.

Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (e.g., power converters in converter stations or HVDC converters) are required at each interface between AC and DC power to effect the required conversion from AC to DC or from DC to AC.

A power transmission network may be operated using synchronous grid forming (SGFM). In SGFM, the power converters behave as three-phase, positive-phase sequence AC voltage sources behind an impedance, that operate at a frequency synchronous with SGFM sources connected to the power transmission network.

The choice of the most suitable HVDC power transmission network or scheme depends on the particular application and scheme features. Examples of power transmission networks include monopole power transmission networks and bipole power transmission networks.

A HVDC power transmission network may comprise a DC voltage controller for regulating and maintaining the DC voltage levels for stable and efficient operation of the system.

The DC voltage controller is typically implemented in a converter station, where it manages the DC voltage of the DC power by compensating for fluctuations caused by variations in load or disturbances in the network.

Examples described herein tend to provide improvements relating to DC voltage controllers in power transmission networks using SGFM.

Summary

There is provided a method performed by a DC voltage controller for a HVDC converter, the method comprising: generating a synchronous phase angle from a DC voltage error, wherein the DC voltage error is generated from a measured DC voltage and a demanded DC voltage; generating an AC grid phase angle from an AC grid signal; generating a DC power compensation function based at least in part on the measured DC voltage; and generating, for the HVDC converter, a phase angle demand based on at least one of: the synchronous phase angle, the AC grid phase angle, and the DC power compensation function.

There is also provided a DC voltage controller for a HVDC converter, the DC voltage controller comprising: at least one memory; at least one processor coupled with the at least one memory and configured to cause the DC voltage controller to: generate a synchronous phase angle from a DC voltage error for the HVDC converter, wherein the DC voltage error is generated from a measured DC voltage of a DC network and a demanded DC voltage; generate an AC grid phase angle from an AC grid signal; generate a DC power compensation function based at least in part on the measured DC voltage; and generate, for the HVDC converter, a phase angle demand based on at least one of: the synchronous phase angle, the AC grid phase angle and the DC power compensation function.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

Brief description of the drawings

Embodiments of the invention will now be described by way of example only and with reference to the accompanying drawings, in which:

Figure 1 shows generically, an example of a power transmission network;

Figure 2 shows an embodiment of a controller for a power converter;

Figure 3 shows a DC voltage controller in accordance with aspects of the present disclosure;

Figure 4 shows a DC voltage controller in accordance with aspects of the present disclosure;

Figure 5 is a plot illustrating the DC voltage from a DC voltage controller in accordance with aspects of the present disclosure;

Figure 6 is a plot illustrating the DC voltage from a DC voltage controller in accordance with aspects of the present disclosure;

Figure 7 illustrates an example of a processor in accordance with aspects of the present disclosure;

Figure 8 illustrates an example of a DC voltage controller in accordance with aspects of the present disclosure;

Figure 9 illustrates a flowchart of a method performed by a DC voltage controller in a power transmission network in accordance with aspects of the present disclosure.

Detailed description

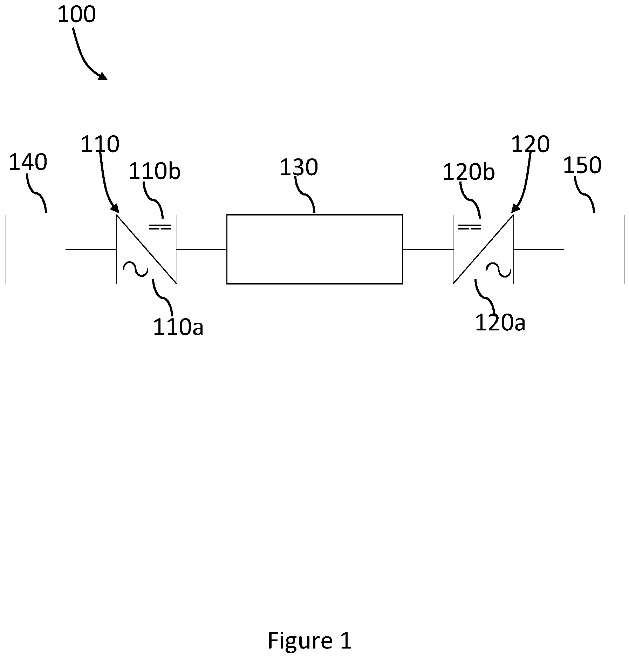

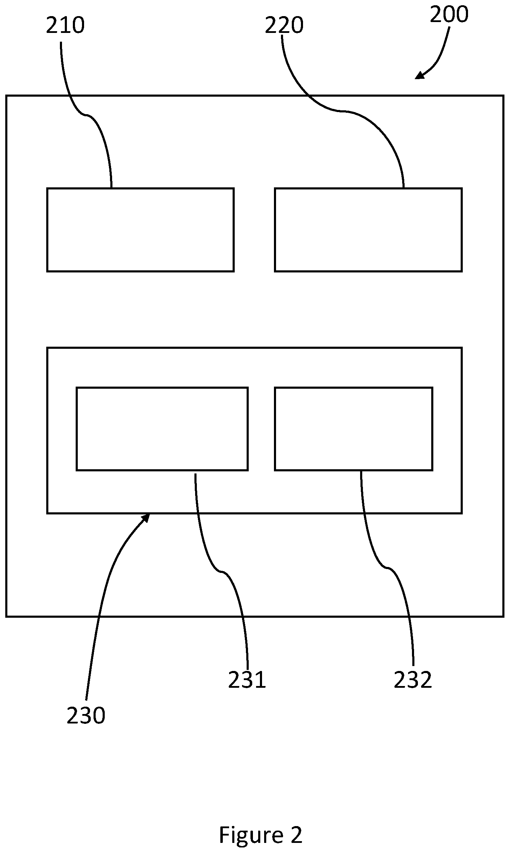

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the method 1000 of Figure 10.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a to the second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/-current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with other SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

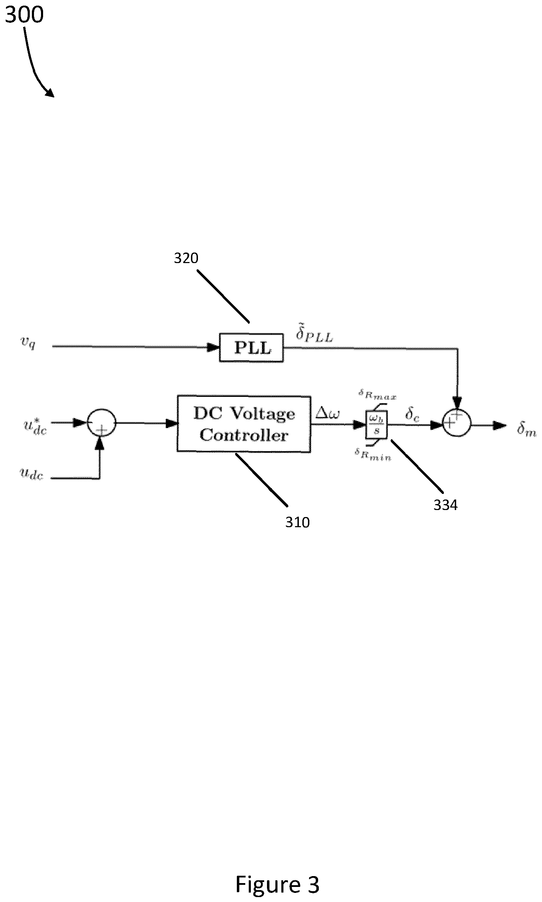

Figure 3 shows a DC voltage controller 300 in accordance with aspects of the present disclosure.

The DC voltage controller 300 comprises a DC voltage controller module 310 which receives a DC voltage error signal and outputs a synchronous angular

speed $\Delta\omega$. The synchronous angular speed $\Delta\omega$ is passed through an integrator 334 to generate a synchronous phase angle $\delta_c$. The synchronous phase angle $\delta_c$ is added to an AC grid phase angle $\delta_{PLL}$ to generate a phase angle demand $\delta_m$ for regulating a DC voltage signal of a HVDC converter (not shown).

The DC voltage error signal is generated by subtracting a demanded DC voltage signal $u_{dc}^*$ from a measured DC voltage signal $u_{dc}$. The AC grid phase angle $\delta_{PLL}$ is generated by processing an AC grid signal $V_q$ using a phase locked loop (PLL) 320.

The integrator 334 is defined by a base frequency $\omega_c$, a minimum phase angle $\delta_{Rmin}$, a maximum phase angle $\delta_{Rmax}$ and an integrator defined by 1/s in the s domain.

HVDC power transmission networks (or HVDC systems) tend to comprise at least one DC voltage controller 300 that maintains the DC voltage by adjusting its own active power output to compensate for any DC energy imbalances. This function may be fulfilled by a DC voltage controlled SGFM feature of the DC voltage controller 300. The SGFM feature may comprise generating a phase angle from a DC voltage regulator.

A bandwidth of the DC voltage controller module 310 may be determined for regulating the DC voltage signal $u_{dc}$ and to compensating for an AC or a DC disturbance. The PLL 320 may comprise a higher bandwidth than the bandwidth of the DC voltage controller module 310 to reduce interactions and instability. However, the bandwidth of the PLL 320 may be limited to avoid fast frequency and angle deviations linked to the fast AC voltage variation as well as voltage noise amplification in the AC grid signal $V_q$.

In a typical point-to-point HVDC configuration, connecting an onshore AC grid to an offshore AC grid, the onshore station tends to be responsible for maintaining the DC voltage, while the second station tends to be responsible for generating the synchronizing AC voltage to a power park module (PPM) that injects the active power. Using the SGFM feature to control the DC voltage on the onshore side tends to enhance the stability of the AC system. However, the stabilizing effect of the SGFM feature is mainly related to its slow controller' dynamics. This mode of operation tends not be suitable for the stability of the HVDC system when an onshore HVDC station is a DC voltage controlled SGFM. Although implementing a grid angle estimation function on the DC voltage loop tends to be beneficial since it tends to compensate for the AC side disturbance, the DC side disturbance tends not be properly compensated by the DC voltage controller. This tends to lead to a significant deviation of the DC voltage and hence undesirably engages the system protection.

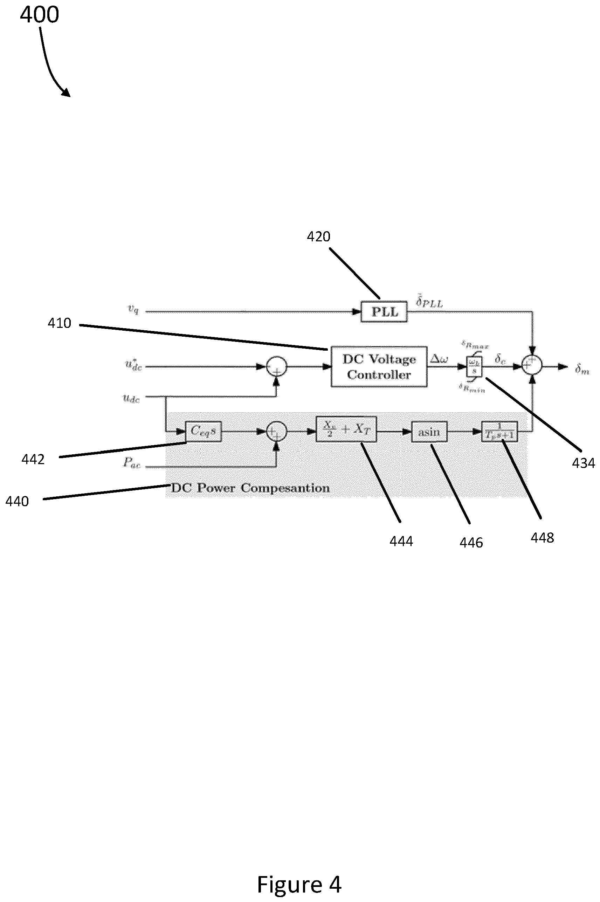

Figure 4 shows a DC voltage controller 400 in accordance with aspects of the present disclosure. The DC voltage controller 400 proposes a DC power compensation function to avoid significant DC voltage drift during fast DC power ramp-up.

The DC voltage controller 400 comprises a DC voltage controller module 410 which receives a DC voltage error signal and outputs a synchronous angular speed $\Delta\omega$. The synchronous angular speed $\Delta\omega$ is passed through an integrator 434 to generate a synchronous phase angle $\delta_c$.

The DC voltage error signal is generated by subtracting a demanded DC voltage signal $u_{dc}^*$ from a measured DC voltage signal $u_{dc}$. The AC grid phase angle $\delta_{PLL}$ is generated by processing an AC grid signal $V_q$ using a PLL 420.

The integrator 434 is defined by a base frequency $\omega_c$, a minimum phase angle $\delta_{Rmin}$, a maximum phase angle $\delta_{Rmax}$ and an integrator defined by 1/s in the s domain.

The synchronous phase angle $\delta_c$ is added to an AC grid phase angle $\delta_{PLL}$ and a DC power compensation function 440 to generate a phase angle demand $\delta_m$ for regulating a DC voltage signal of a HVDC converter (not shown).

The DC power compensation function 440 tends to limit the DC voltage deviation during a DC power change. This tends to be particularly beneficial in the case of a fast DC power change. The DC power compensation function 440 comprises deriving the DC voltage and multiplying it by an estimated capacitance of the overall HVDC link $C_{eq8}$ 440. The estimated capacitance of the overall HVDC link $C_{eq8}$ 440 may comprise the estimated capacitance of the DC cable and the HVDC converter capacitance.

The DC power compensation function 440 further comprises adding an AC active power $P_{ac}$. The DC power compensation function 440 further comprises a function 444, the function 444 comprises an impedance of a valve $X_V$ and a reactance of a transformer $X_T$. The function 444 is $\frac{X_V}{2} + X_T$ .

The DC power compensation function 440 further comprises using a static active power formula to generate a phase angle for compensating for the DC power change. The DC power compensation function 4440 comprises an *asin* function 446 to determine the phase angle for modifying the phase angle demand to compensate for a DC power change in the DC network.

The DC power compensation function 440 further comprises filtering the phase angle. Filtering the phase angle tends to avoid introducing the DC voltage noises in the DC control loop. Filtering the phase angle comprises a low pass filter 448. The low pass filter 448 is a function of a time constant $T_P$. The time constant $T_P$ is a function of a cut off frequency. The low pass filter 448 may be a first order filter described by the equation $\frac{1}{T_P s + 1}$ . Alternatively, the low pass filter 448 may be a second order or higher-order filter.

HVDC power transmission networks (or HVDC systems) tend to comprise at least one DC voltage controller 400 that maintains the DC voltage by adjusting its own DC active power output to compensate for any DC energy imbalances. This function may be fulfilled by a DC voltage controlled SGFM feature of the DC voltage controller 400. The SGFM feature may comprise generating a phase angle from a DC voltage regulator.

A bandwidth of the DC voltage controller module 410 may be determined for regulating the DC voltage signal $u_{dc}$ and to compensating for an AC or a DC disturbance. The PLL 420 may comprise a higher bandwidth than the bandwidth of the DC voltage controller module 410 to reduce interactions and instability. However, the bandwidth of the PLL 420 may be limited to avoid fast frequency and angle deviations linked to the fast AC voltage variation as well as voltage noise amplification in the AC grid signal $V_q$.

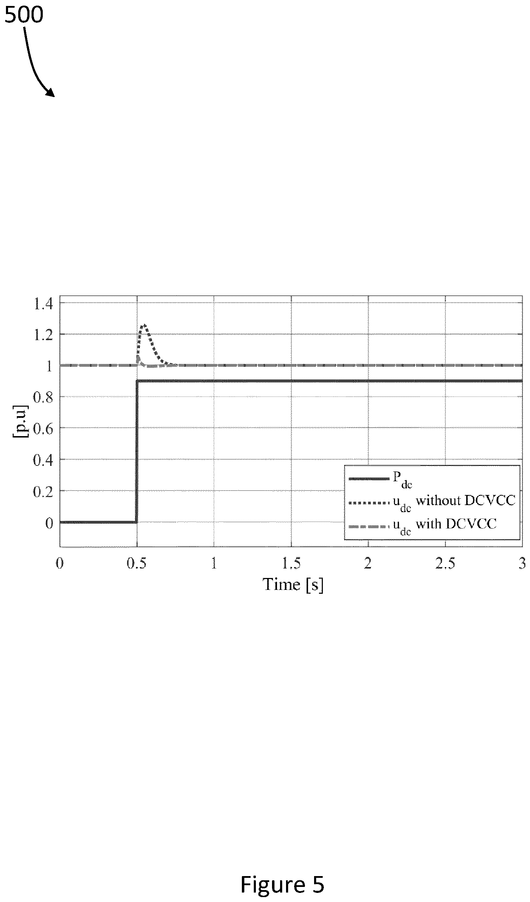

Figure 5 is a plot 500 illustrating the DC voltage from a DC voltage controller in accordance with aspects of the present disclosure. The plot 500 illustrates the impact of the DC power compensation function on the DC voltage for a short circuit ration (SCR) value of 16. The SCR corresponds to the amount of available power in the AC grid to the amount of power transferred to the DC grid.

The plot 500 shows the DC voltage $u_{dc}$ without a DC power compensation function. For example, the DC voltage $u_{dc}$ without the DC power compensation function may correspond to the DC voltage $u_{dc}$ of the DC voltage controller 300 described above in relation to Figure 3 without a DC power compensation function

The plot 500 further shows the DC voltage $u_{dc}$ with a DC power compensation function. For example, the DC voltage $u_{dc}$ may be the DC voltage of the DC voltage controller 400 using DC power compensation function 440 described above in relation to Figure 4.

The plot 500 shows that when DC power $P_{dc}$ increases from 0p.u to 0.9p.u at 0.5s, there is a significant DC disturbance in the DC voltage $u_{dc}$ without a DC power compensation function. The significant DC disturbance in the DC voltage $u_{dc}$ without a DC power compensation function comprises a rapid increase in DC voltage $u_{dc}$ from 1p.u to between 1.2p.u and 1.3p.u followed by a gradual decrease in DC voltage $u_{dc}$ back to 1p.u. after about 250ms.

The plot 500 also shows that when DC power $P_{dc}$ increases from 0p.u to 0.9p.u at 0.5s, there is a smaller DC disturbance in the DC voltage $u_{dc}$ with a DC power compensation function compared to the DC disturbance in the DC voltage $u_{dc}$ without a DC power compensation function. The smaller DC disturbance in the DC voltage $u_{dc}$ with a DC power compensation function comprises a rapid increase in DC voltage $u_{dc}$ from 1p.u to about 1.05p.u followed by a gradual decrease in DC voltage $u_{dc}$ back to 1p.u. after about 50ms.

Therefore, plot 500 illustrates that without the DC power compensation function, the DC power results in a significant increase of the DC voltage up to 25% overvoltage, while the use of DC power compensation function, significantly limits the DC voltage to 8%.

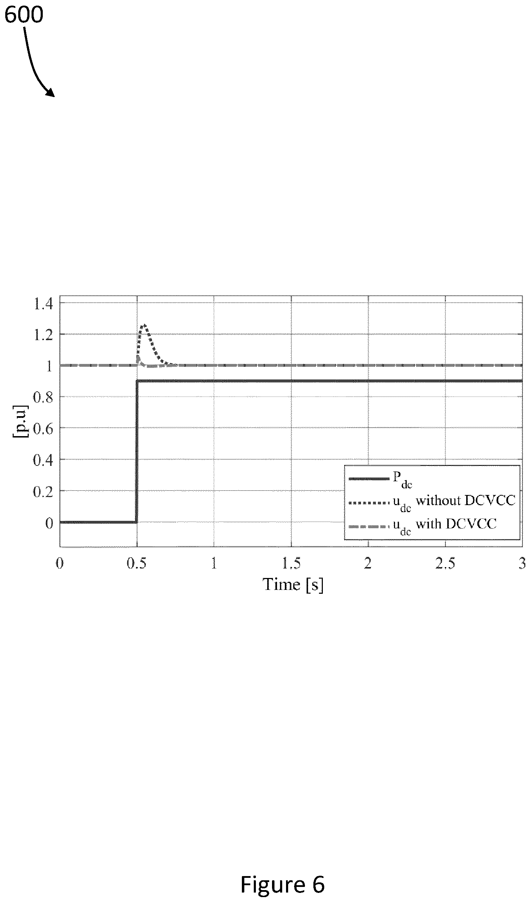

Figure 6 is a plot 600 illustrating the DC voltage from a DC voltage controller in accordance with aspects of the present disclosure. The plot 600 illustrates the impact of the DC power compensation function on the DC voltage for a SCR value of 2. The SCR corresponds to the amount of available power in the AC grid to the amount of power transferred to the DC grid.

The plot 600 shows the DC voltage $u_{dc}$ without a DC power compensation function. For example, the DC voltage $u_{dc}$ without the DC power compensation function may correspond to the DC voltage $u_{dc}$ of the DC voltage controller 300 described above in relation to Figure 3 without a DC power compensation function.

The plot 600 further shows the DC voltage $u_{dc}$ with a DC power compensation function. For example, the DC voltage $u_{dc}$ may be the DC voltage of the DC voltage controller 400 using DC power compensation function 440 described above in relation to Figure 4.

The plot 600 shows that when DC power $P_{dc}$ increases from 0p.u to 0.9p.u at 0.5s, there is a significant DC disturbance in the DC voltage $u_{dc}$ without a DC power compensation function. The significant DC disturbance in the DC voltage $u_{dc}$ without a DC power compensation function comprises a rapid increase in DC voltage $u_{dc}$ from 1p.u to between 1.2p.u and 1.3p.u followed by a gradual decrease in DC voltage $u_{dc}$ back to 1p.u. after about 250ms.

The plot 600 also shows that when DC power $P_{dc}$ increases from 0p.u to 0.9p.u at 0.5s, there is a smaller DC disturbance in the DC voltage $u_{dc}$ with a DC power compensation function compared to the DC disturbance in the DC voltage $u_{dc}$ without a DC power compensation function. The smaller DC disturbance in the DC voltage $u_{dc}$ with a DC power compensation function comprises a rapid increase in DC voltage $u_{dc}$ from 1p.u to about 1.05p.u followed by a gradual decrease in DC voltage $u_{dc}$ back to 1p.u. after about 50ms.

Therefore, plot 600 illustrates that without the DC power compensation function, the DC power results in a significant increase of the DC voltage up to 25% overvoltage, while the use of DC power compensation function, significantly limits the DC voltage to 8%.

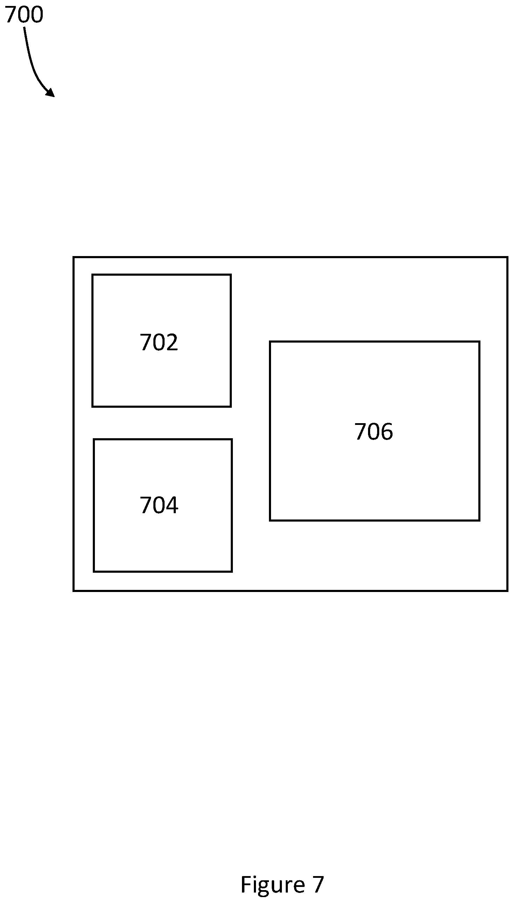

Figure 7 illustrates an example of a processor 700 in accordance with aspects of the present disclosure.

The processor 700 may be an example of a processor configured to perform various operations in accordance with examples as described herein. The processor 700 may include a controller 702 configured to perform various operations in accordance with examples as described herein. The processor 700 may optionally include at least one memory 704, which may be, for example, an L1/L2/L3 cache. Additionally, or alternatively, the processor 700 may optionally include one or more arithmetic-logic units (ALUs) 706. One or more of these components may be in electronic communication or otherwise coupled (e.g., operatively, communicatively, functionally, electronically, electrically) via one or more interfaces (e.g., buses).

The processor 700 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 700) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 702 may be configured to manage and coordinate various operations (e.g., signalling, receiving, obtaining, retrieving, transmitting, outputting, forwarding, storing, determining, identifying, accessing, writing, reading) of the processor 700 to cause the processor 700 to support various operations in accordance with examples as described herein. For example, the controller 702 may operate as a control unit of the processor 700, generating control signals that manage the operation of various components of the processor 700. These control signals include enabling or disabling functional units, selecting data paths, initiating memory access, and coordinating timing of operations.

The controller 702 may be configured to fetch (e.g., obtain, retrieve, receive) instructions from the memory 704 and determine subsequent instruction(s) to be executed to cause the processor 700 to support various operations in accordance with examples as described herein. The controller 702 may be configured to track memory address of instructions associated with the memory 704. The controller 702 may be configured to decode instructions to determine the operation to be performed and the operands involved. For example, the controller 702 may be configured to interpret the instruction and determine control signals to be output to other components of the processor 700 to cause the processor 700 to support various operations in accordance with examples as described herein. Additionally, or alternatively, the controller 702 may be configured to manage flow of data within the processor 700. The controller 702 may be configured to control transfer of data between registers, arithmetic logic units (ALUs), and other functional units of the processor 700.

The memory 704 may include one or more caches (e.g., memory local to or included in the processor 700 or other memory, such RAM, ROM, DRAM, SDRAM, SRAM, MRAM, flash memory, etc. In some implementations, the memory 704 may reside within or on a processor chipset (e.g., local to the processor 700). In some other implementations, the memory 704 may reside external to the processor chipset (e.g., remote to the processor 700).

The memory 704 may store computer-readable, computer-executable code including instructions that, when executed by the processor 700, cause the processor 700 to perform various functions described herein. The code may be stored in a non-transitory computer-readable medium such as system memory or another type of memory. The controller 702 and/or the processor 700 may be configured to execute computer-readable instructions stored in the memory 704 to cause the processor 700 to perform various functions. For example, the processor 700 and/or the controller 702 may be coupled with or to the memory 704, the processor 700, the controller 702, and the memory 704 may be configured to perform various functions described herein. In some examples, the processor 700 may include multiple processors and the memory 704 may include multiple memories. One or more of the multiple processors may be coupled with one or more of the multiple memories, which may, individually or collectively, be configured to perform various functions herein.

The one or more ALUs 706 may be configured to support various operations in accordance with examples as described herein. In some implementations, the one or more ALUs 706 may reside within or on a processor chipset (e.g., the processor 700). In some other implementations, the one or more ALUs 706 may reside external to the processor chipset (e.g., the processor 700). One or more ALUs 706 may perform one or more computations such as addition, subtraction, multiplication, and division on data. For example, one or more ALUs 706 may receive input operands and an operation code, which determines an operation to be executed. One or more ALUs 706 be configured with a variety of logical and arithmetic circuits, including adders, subtractors, shifters, and logic gates, to process and manipulate the data according to the operation. Additionally, or alternatively, the one or more ALUs 706 may support logical operations such as AND, OR, exclusive-OR (XOR), not-OR (NOR), and not-AND (NAND), enabling the one or more ALUs 706 to handle conditional operations, comparisons, and bitwise operations.

The processor 700 may support DC voltage control in accordance with examples as disclosed herein. The processor 700 may be configured to support a means for generating a synchronous phase angle from a DC voltage error, wherein the DC voltage error is generated from a measured DC voltage and a demanded DC voltage; generating an AC grid phase angle from an AC grid signal; generating a DC power compensation function based at least in part on the measured DC voltage; and generating, for the HVDC converter, a phase angle demand based on at least one of: the synchronous phase angle, the AC grid phase angle, and the DC power compensation function.

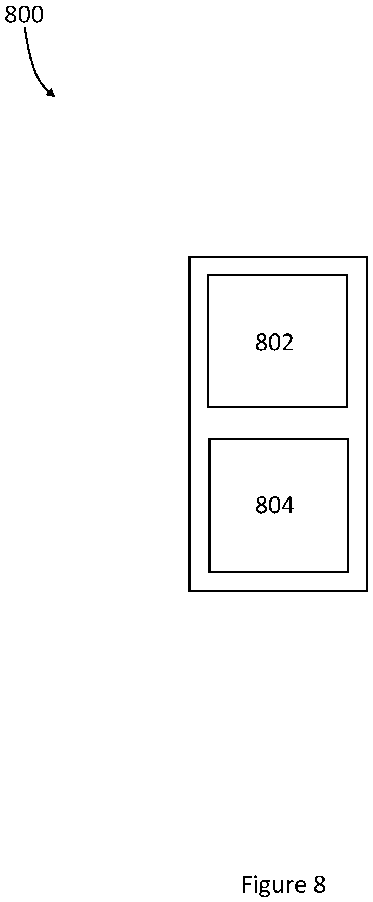

Figure 8 illustrates an example of a DC voltage controller 800 in accordance with aspects of the present disclosure.

The DC voltage controller 800 may include a processor 802 and a memory 804. The processor 802 and the memory 804 or various combinations thereof or various components thereof may be examples of means for performing various aspects of the present disclosure as described herein. These components may be coupled (e.g., operatively, communicatively, functionally, electronically, electrically) via one or more interfaces.

The processor 802 and the memory 804 various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 802 may include an intelligent hardware device (e.g., a general-purpose processor, a DSP, a CPU, an ASIC, an FPGA, or any combination thereof). In some implementations, the processor 802 may be configured to operate the memory 804. In some other implementations, the memory 804 may be integrated into the processor 802. The processor 802 may be configured to execute computer-readable instructions stored in the memory 804 to cause the DC voltage controller 800 to perform various functions of the present disclosure.

The memory 804 may include volatile or nonvolatile memory. The memory 804 may store computer-readable, computer-executable code including instructions when executed by the processor 802 cause the DC voltage controller 800 to perform various functions described herein. The code may be stored in a non-transitory computer-readable medium such the memory 804 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 802 and the memory 804 coupled with the processor 802 may be configured to cause the DC voltage controller 800 to perform one or more of the functions described herein (e.g., executing, by the processor 802, instructions stored in the memory 804). The DC voltage controller 800 may be configured to support a means for generating a synchronous phase angle from a DC voltage error, wherein the DC voltage error is generated from a measured DC voltage and a demanded DC voltage; generating an AC grid phase angle from an AC grid signal; generating a DC power compensation function based at least in part on the measured DC voltage; and generating, for the HVDC converter, a phase angle demand based on at least one of: the synchronous phase angle, the AC grid phase angle, and the DC power compensation function.

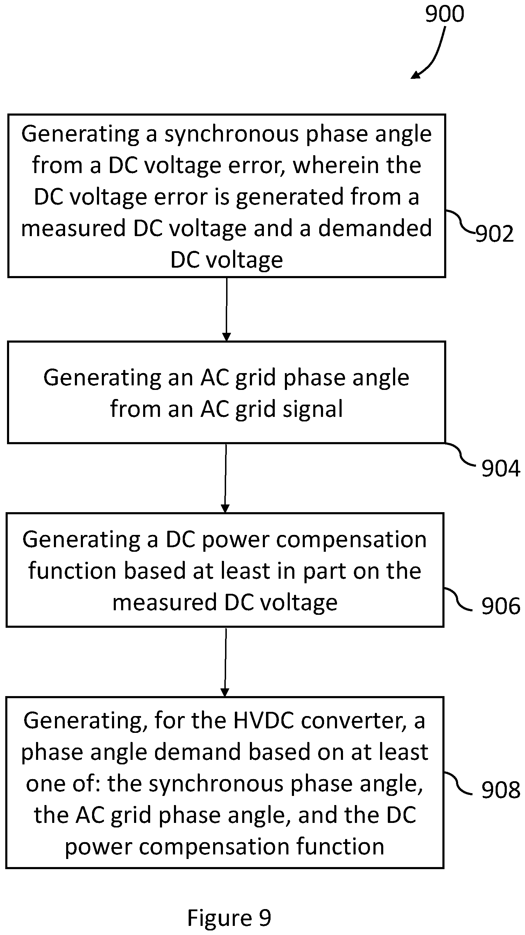

Figure 9 illustrates a flowchart of a method performed by a DC voltage controller in a power transmission network in accordance with aspects of the present disclosure. The operations of the method 900 may be implemented by a DC voltage controller as described herein. In some implementations, the DC voltage controller may execute a set of instructions to control the function elements of the DC voltage controller to perform the described functions.

At 902, the method 900 may include generating a synchronous phase angle from a DC voltage error, wherein the DC voltage error is generated from a measured DC voltage and a demanded DC voltage. The operations of 902 may be performed in accordance with examples as described herein. In some implementations, aspects of the operations of 902 may be performed by a DC voltage controller as described with reference to Figure 8.

At 904, the method 900 may include generating an AC grid phase angle from an AC grid signal. The operations of 904 may be performed in accordance with examples as described herein. In some implementations, aspects of the operations of 904 may be performed by a DC voltage controller as described with reference to Figure 8.

At 906, the method 900 may include generating a DC power compensation function based at least in part on the measured DC voltage. The operations of 906 may be performed in accordance with examples as described herein. In some implementations, aspects of the operations of 906 may be performed a DC voltage controller as described with reference to Figure 8.

At 908, the method 900 may include generating, for the HVDC converter, a phase angle demand based on at least one of: the synchronous phase angle, the AC grid phase angle, and the DC power compensation function. The operations of 908 may be performed in accordance with examples as described herein. In some implementations, aspects of the operations of 908 may be performed a DC voltage controller as described with reference to Figure 8.

It should be noted that the method 900 described herein describes a possible implementation, and that the operations and the steps may be rearranged or otherwise modified and that other implementations are possible.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

In the disclosure herein, there is provided a method performed by a DC voltage controller for a HVDC converter, the method comprising: generating a synchronous phase angle from a DC voltage error, wherein the DC voltage error is generated from a measured DC voltage and a demanded DC voltage; generating an AC grid phase angle from an AC grid signal; generating a DC power compensation function based at least in part on the measured DC voltage; and generating, for the HVDC converter, a phase angle demand based on at least one of: the synchronous phase angle, the AC grid phase angle, and the DC power compensation function. Such a method tends to limit the effect of a DC voltage deviation on the HVDC converter.

The HVDC converter may be part of a power transmission network. The power transmission network may comprise a first AC network connected to a power transmission medium. The first AC network may be a first AC grid. The power transmission medium may be a DC network. The DC network may be a DC grid. The power transmission network may further comprise a second AC network connected to the power transmission medium. The second AC network may be a second AC grid.

The HVDC converter may be a power conversion means. The HVDC converter may be arranged to convert AC power to DC power. The HVDC converter may be arranged to convert DC power to AC power. The HVDC converter may be configured as a rectifier. The HVDC converter may be configured as an inverter.

The HVDC converter may be operated using synchronous grid forming (SGFM). The HVDC converter may comprise a three-phase, positive-phase sequence AC voltage source behind an impedance. The HVDC converter may operate at a frequency synchronous with an SGFM source connected to the power transmission network.

The synchronous angular speed may correspond to a frequency of a rotor of a virtual synchronous generator control. The synchronous angular speed may be $\Delta\omega$ as described herein. The synchronous phase angle may be a synchronous phase angle signal. The AC grid phase angle may be an AC grid phase angle signal. The AC grid phase angle may be $\delta_{PLL}$ as described herein. The AC grid signal may be an AC signal from an AC grid. The AC grid signal may be $V_q$ as described herein. The synchronous phase angle may be $\delta_c$ as described herein. The DC voltage error signal may be udc- udc* as described herein. udc* may be a demanded DC voltage signal as described herein. udc may be a measured DC voltage signal as described herein.

The synchronous phase angle may correspond to the phase angle of the DC grid. The AC grid phase angle may correspond to the phase angle of the AC grid. The phase angle demand may be a damping phase angle. The phase angle demand may be a phase angle demand signal.

The demanded DC voltage may correspond to a desired DC voltage for the DC grid. The measured DC voltage may be the DC voltage measured across the HVDC converter.

The phase angle demand may correspond to a phase angle for regulating a DC voltage signal of the HVDC converter. The phase angle demand may be phase angle demand $\delta_m$ as described herein.

The DC power compensation function may compensate for a DC voltage deviation in the DC network. The DC power compensation function may compensate for a DC power change in the DC network. The DC power compensation function may comprise a phase angle for modifying the phase angle demand to compensate for a DC power change in the DC network. The DC power compensation function may comprise an asin function to determine the phase angle for modifying the phase angle demand to compensate for a DC power change in the DC network.

The DC power compensation function may be a function of an impedance of a valve $X_v$. The DC power compensation function may be a function of a reactance of a transformer $X_T$. The DC power compensation function may comprise a low pass filter. The low pass filter may be for reducing noise in the DC power compensation function. The low pass filter may be a function of a time constant TP. The time constant $T_P$ may be a function of a cut off frequency. The low pass filter may be a first order filter. The low pass filter may be a second order filter. The low pass filter may be a third order filter. The low pass filter may comprise a transfer function. The low pass filter may comprise a Laplace transform.

Generating the DC power compensation function may comprise generating the DC power compensation function based at least in part on an AC power signal. The AC power signal may be an AC active power. The AC power signal may be $P_{ac}$ as described herein.

Generating the DC power compensation function may comprise generating the DC power compensation function based at least in part on an estimated capacitance of the HVDC link. The estimated capacitance may be an estimated capacitance of a DC cable. The DC cable may be in the DC grid. The estimated capacitance may be an estimated capacitance of the HVDC converter. The estimated capacitance may be $C_{eq8}$ as described herein.

Generating the synchronous phase angle may comprise generating a synchronous angular speed. The synchronous angular speed may correspond to a frequency of a rotor of a virtual synchronous generator control. Generating the synchronous angular speed may comprise multiplying the DC voltage error by a DC gain. The DC gain may depend on the bandwidth of the HVDC converter. The DC gain may depend on a DC system capacitance.

The method may further comprise modulating the synchronous phase angle based on a minimum phase angle and a maximum phase angle. The maximum phase angle and the minimum phase angle may be based on an overcurrent capability of the converter. For example, the minimum phase angle may be -60 degrees. The maximum phase angle may be +60 degrees.

Generating the phase angle demand may comprise a sum of the AC grid phase angle, the synchronous phase angle and the DC power compensation function. The method may further comprise receiving the measured DC voltage of the DC network and the demanded DC voltage. The method may further comprise receiving the AC grid signal from an AC grid.

There is further provided a DC voltage controller for a HVDC converter, the DC voltage controller comprising: at least one memory; at least one processor coupled with the at least one memory and configured to cause the DC voltage controller to: generate a synchronous phase angle from a DC voltage error for the HVDC converter, wherein the DC voltage error is generated from a measured DC voltage of a DC network and a demanded DC voltage; generate an AC grid phase angle from an AC grid signal; generate a DC power compensation function based at least in part on the measured DC voltage; and generate, for the HVDC converter, a phase angle demand based on at least one of: the synchronous phase angle, the AC grid phase angle and the DC power compensation function. Such a DC voltage controller tends to limit the effect of a DC voltage deviation on the HVDC converter.

The at least one processor coupled with the at least one memory being configured to cause the DC voltage controller to generate the DC power compensation function may comprise the at least one processor coupled with the at least one memory being further configured to cause the DC voltage controller to: generate the DC power compensation function based at least in part on an AC power signal.

The at least one processor coupled with the at least one memory being configured to cause the DC voltage controller to generate the DC power compensation function may comprise the at least one processor coupled with the at least one memory being further configured to cause the DC voltage controller to: generate the DC power compensation function based at least in part on an estimated capacitance of a HVDC link.

The at least one processor coupled with the at least one memory being configured to cause the DC voltage controller to generate the synchronous phase angle may comprise the at least one processor coupled with the at least one memory being further configured to cause the DC voltage controller to: generate a synchronous angular speed.

The at least one processor coupled with the at least one memory being configured to cause the DC voltage controller to generate the synchronous angular speed may comprise the at least one processor coupled with the at least one memory being further configured to cause the DC voltage controller to: multiply the DC voltage error by a DC gain. The at least one processor coupled with the at least one memory may be further configured to cause the DC voltage controller to: modulate the synchronous phase angle based on a minimum phase angle and a maximum phase angle.

The at least one processor coupled with the at least one memory being configured to cause the DC voltage controller to generate the phase angle demand may comprise the at least one processor coupled with the at least one memory being further configured to cause the DC voltage controller to sum the AC grid phase angle, the synchronous phase angle and the DC power compensation function.

The at least one processor coupled with the at least one memory may be further configured to cause the DC voltage controller to receive the measured DC voltage of the DC network and the demanded DC voltage. The at least one processor coupled with the at least one memory may be further configured to cause the DC voltage controller to receive the AC grid signal from an AC grid.

**Claims**

1. A method performed by a DC voltage controller for a HVDC converter, the method comprising:

   generating a synchronous phase angle from a DC voltage error, wherein the DC voltage error is generated from a measured DC voltage and a demanded DC voltage;
   generating an AC grid phase angle from an AC grid signal;
   generating a DC power compensation function based at least in part on the measured DC voltage; and
   generating, for the HVDC converter, a phase angle demand based on at least one of: the synchronous phase angle, the AC grid phase angle, and the DC power compensation function.

2. The method of claim 1, wherein generating the DC power compensation function comprises generating the DC power compensation function based at least in part on an AC power signal.

3. The method of claim 1 or claim 2, wherein generating the DC power compensation function comprises generating the DC power compensation function based at least in part on an estimated capacitance of the HVDC link.

4. The method of any one of claims 1 to 3, wherein generating the synchronous phase angle comprises generating a synchronous angular speed.

5. The method of any one of claims 1 to 4, wherein generating the synchronous angular speed comprises multiplying the DC voltage error by a DC gain.

6. The method of any one of claims 1 to 5, further comprising modulating the synchronous phase angle based on a minimum phase angle and a maximum phase angle.

7. The method of any one of claims 1 to 6, wherein generating the phase angle demand comprises a sum of the AC grid phase angle, the synchronous phase angle and the DC power compensation function.

8. The method of any one of claims 1 to 7, further comprising receiving the measured DC voltage of the DC network and the demanded DC voltage.

9. The method of any one of claims 1 to 8, further comprising receiving the AC grid signal from an AC grid.

10. A DC voltage controller for a HVDC converter, the DC voltage controller comprising:

    at least one memory;
    at least one processor coupled with the at least one memory and configured to cause the DC voltage controller to:

    generate a synchronous phase angle from a DC voltage error for the HVDC converter, wherein the DC voltage error is generated from a measured DC voltage of a DC network and a demanded DC voltage;
    generate an AC grid phase angle from an AC grid signal;
    generate a DC power compensation function based at least in part on the measured DC voltage; and
    generate, for the HVDC converter, a phase angle demand based on at least one of: the synchronous phase angle, the AC grid phase angle and the DC power compensation function.

11. The DC voltage controller of claim 10, wherein the at least one processor coupled with the at least one memory being configured to cause the DC voltage controller to generate the DC power compensation function comprises the at least one processor coupled with the at least one memory being further configured to cause the DC voltage controller to:

generate the DC power compensation function based at least in part on an AC power signal.

12. The DC voltage controller of claim 10 or claim 11, wherein the at least one processor coupled with the at least one memory being configured to cause the DC voltage controller to generate the DC power compensation function comprises the at least one processor coupled with the at least one memory being further configured to cause the DC voltage controller to:

generate the DC power compensation function based at least in part on an estimated capacitance of a HVDC link.

13. The DC voltage controller of any one of claims 10 to 12, wherein the at least one processor coupled with the at least one memory being configured to cause the DC voltage controller to generate the synchronous phase angle comprises the at least one processor coupled with the at least one memory being further configured to cause the DC voltage controller to:

generate a synchronous angular speed.

14. The DC voltage controller of any one of claims 10 to 13, wherein the at least one processor coupled with the at least one memory being configured to cause the DC voltage controller to generate the synchronous angular speed comprises the at least one processor coupled with the at least one memory being further configured to cause the DC voltage controller to:

multiply the DC voltage error by a DC gain.

15. The DC voltage controller of any one of claims 10 to 14, wherein the at least one processor coupled with the at least one memory is further configured to cause the DC voltage controller to:

modulate the synchronous phase angle based on a minimum phase angle and a maximum phase angle.

100

140   110   110b   130   120b   120   150

110a   120a

Figure 1

Figure 2

300

Figure 3

400

Figure 4

500

Figure 5

600

Figure 6

700

Figure 7

800

802

804

Figure 8

900

Generating a synchronous phase angle
from a DC voltage error, wherein the
DC voltage error is generated from a
measured DC voltage and a demanded
DC voltage

902

Generating an AC grid phase angle
from an AC grid signal

904

Generating a DC power compensation
function based at least in part on the
measured DC voltage

906

Generating, for the HVDC converter, a
phase angle demand based on at least
one of: the synchronous phase angle,
the AC grid phase angle, and the DC
power compensation function

908

Figure 9

Europäisches
Patentamt

European
Patent Office

Office européen
des brevets

# EUROPEAN SEARCH REPORT

**Application Number**

EP 24 22 1964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 952 824 A (ELECTRIC POWER RES INST CO LTD CSG; CHINA SOUTHERN POWER GRID CO) 11 June 2021 (2021-06-11) * paragraph [0004] - paragraph [0046] * * paragraph [0060] - paragraph [0065]; figure 1 * | 1-15 | INV. H02J3/36 H02M1/00 H02M7/757 G05B11/01 |
| A | CN 103 280 842 B (UNIV HUAZHONG SCIENCE TECH) 17 December 2014 (2014-12-17) * paragraph [0005] - paragraph [0023] * * paragraph [0033] - paragraph [0080]; figures 1-7 * | 1-15 | |

TECHNICAL FIELDS SEARCHED (IPC)

H02J
H02M
G05B

The present search report has been drawn up for all claims

| Place of search | Date of completion of the search | Examiner |
|---|---|---|
| Munich | 21 May 2025 | Mäki-Mantila, Harri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 765 547 A1

## ANNEX TO THE EUROPEAN SEARCH REPORT
## ON EUROPEAN PATENT APPLICATION NO.

EP 24 22 1964

21-05-2025

| Patent document cited in search report | Publication date | Patent family member(s) | Publication date |
|---|---|---|---|
| CN 112952824 A | 11-06-2021 | NONE | |
| CN 103280842 B | 17-12-2014 | NONE | |